# EUROPEAN PATENT APPLICATION

(11) **EP 2 463 090 A1**
(43) Date of publication of application: **13.06.2012**
(21) Application number: 10806525.1
(22) Date of filing: 05.08.2010
(51) Int. Cl.: B32B 7/02, B32B 5/14, B32B 27/00, B32B 27/16, C08J 7/00, H02N 11/00

(54) **ELECTRICALLY CONDUCTIVE POLYMER COMPOSITE STRUCTURE, PROCESS FOR PRODUCTION OF ELECTRICALLY CONDUCTIVE POLYMER COMPOSITE STRUCTURE, AND ACTUATOR ELEMENT**

(30) Priority: 07.08.2009 JP 2009185087
(71) Applicant: Eamex Corporation, Suita-shi Osaka 564-0062 (JP)
(72) Inventor: SATO,Yuichi, Suita-shi Osaka 564-0062 (JP); TANAKA,Noboru, Suita-shi Osaka 564-0062 (JP); NAKAYAMA,Minoru, Suita-shi Osaka 564-0062 (JP)
(74) Representative: Sajda, Wolf E.
(86) International application number: PCT/JP2010/063310
(87) International publication number: WO 2011/016526

(57) **Abstract**

Provided are: a conducting polymer composite structure, which does not require any separator between electrodes, can be reduced in size, can be produced at reduced cost and with improved workability, and has an excellent impact resistance; a process for producing the conducting polymer composite structure; and an actuator element using the conducting polymer composite structure. The conducting polymer composite structure includes at least one conducting polymer layer, and is a structure in which a surface layer of the conducting polymer layer is an insulating layer.

## Description

### TECHNICAL FIELD

The present invention relates to a conducting polymer composite structure, a process for producing the conducting polymer composite structure, and an actuator element.

### BACKGROUND ART

Conducting polymers such as polypyrrole and the like are known to have electrochemomechanical deformation, phenomena of expansion and contraction by electrochemical redox reaction. Recently, this electrochemomechanical deformation of conducting polymers has been attracting public attention, because this is expected to be applied for the use of artificial muscles, robot arms, artificial arms, actuators and the like.

It is common that conducting polymers are produced by an electrolytic polymerization method. The electrolytic polymerization method usually carried out is a process performed by adding a monomer component such as pyrrole and a dopant component in an electrolytic solution, providing a working electrode for polymerization and a counter electrode for polymerization in this electrolytic solution, and applying a voltage between the electrodes, thereby forming an conducting polymer as a film (a conducting polymer film) on the working electrode for polymerization (e.g., see Non-Patent Document 1).
In the conducting polymer films obtained by the electrolytic polymerization, displacement such as expansion/contraction, bending, or twisting can be caused by applying a voltage thereto.

Patent Document 1 describes that a conducting polymer composite structure is obtained by subjecting a conducting polymer to electrolytic polymerization on a working electrode for polymerization using a metal spring member as an electrically conductive substrate which is to be used as the working electrode for polymerization. There is a disclosure about obtaining a conducting polymer composite structure in the electrolytic polymerization, wherein the conducting polymer is polymerized on the surface of the electrically conductive substrate by applying a voltage to a metal spring member that is a working electrode for polymerization so that the conducting polymer is grown up from the surface of the working electrode for polymerization to fill the spaces between wire members constituting the metal spring members.

The conducting polymer film produced by the electrolytic polymerization method described above can be used not only in a small actuator such as a micro-machine, but also in a primary battery electrode, a secondary battery electrode, a capacitor electrode, a solar cell electrode and an electroluminescent element. When the conducting polymer film is used in the capacitor electrode, it is necessary to place a separator between the electrodes. A porous base material imparting insulation between the electrodes and further having ion permeability has been used as such a separator.

However, the separator described above has a problem such that it occupies a large percentage of volume and cost in view of all components of the device, as well as has a problem in its workability and economy (cost aspect) in the setting of the separator also from the demand of miniaturization and cost reduction in the device.

### PRIOR ART DOCUMENTS

### PATENT DOCUMENT

Patent Document 1: Japanese Patent No. 4 048 236

### Non-Patent Document

Non-Patent Document 1: "Dodensei Kobunshi", pages 70 to 73, 8th edition by Naoya Ogata, published by Kodansha Scientific, February 10, 1990)

### SUMMARY OF THE INVENTION

### PROBLEMS TO BE SOLVED BY THE INVENTION

Under these circumstances, there has been demanded development of a conducting polymer composite structure, which does not require any separator between electrodes, can be reduced in size, can be produced at reduced cost and with improved workability, and has excellent impact resistance; a process for producing the conducting polymer composite structure; and an actuator element using the conducting polymer composite structure.

### MEANS FOR SOLVING THE PROBLEMS

Accordingly, the present inventors made intensive studies on the constitution of conducting polymer composite structures and, as a result, found that the above-mentioned problems can be solved by using the conducting polymer composite structure described below. The present invention has been accomplished based on these findings.

That is, the conducting polymer composite structure of the present invention is a conducting polymer composite structure including at least one conducting polymer layer, wherein a surface layer of the conducting polymer layer is an insulating layer.

In the conducting polymer composite structure of the present invention, the shape of the conducting polymer composite structure is preferably at least one shape selected from the group consisting of plane, stick, rod, planar zigzag, cornice, chain, coil, spring, fiber, tube, bag, bellows, mesh,

The conducting polymer composite structure of the present invention preferably further includes a substrate.

In the conducting polymer composite structure of the present invention, the conducting polymer of the conducting polymer layer preferably contains pyrrole and/or a pyrrole derivative in its molecular chain.

In the conducting polymer composite structure of the present invention, the shape of the substrate is preferably at least one shape selected from the group consisting of plane, stick, rod, planar zigzag, cornice, chain, coil, spring, fiber, tube, bag, bellows, mesh, and knit shapes.

The actuator element of the present invention preferably uses the conducting polymer composite structure.

The actuator element of the present invention is preferably one wherein the substrate has expansion/contraction properties.

The actuator element of the present invention is preferably one wherein the conducting polymer layer is driven by expansion/contraction, bending, or twisting through an electrolytic expansion/contraction.

The process for producing a conducting polymer composite structure according to the present invention including at least one conducting polymer layer is a process including a step of forming at least one conducting polymer layer and a step of subjecting a surface layer of the conducting polymer layer to an insulation treatment.

In the process for producing a conducting polymer composite structure according to the present invention, it is preferable for the conducting polymer composite structure to further include a substrate.

In the process for producing a conducting polymer composite structure according to the present invention, it is preferable that the conducting polymer layer is obtained by electrolytic polymerization of at least pyrrole and/or a pyrrole derivative.

The process for producing a conducting polymer composite structure according to the present invention is preferably a process wherein the insulation treatment is at least one treatment selected from the group consisting of an oxidation treatment, an acid treatment, an alkali treatment, a heat treatment, a light treatment, an electron beam treatment, and an ozone treatment.

### EFFECT OF THE INVENTION

It is possible to form an integrated electrode including an electrode and a separator because the conducting polymer composite structure of the present invention includes at least one conducting polymer layer and the surface layer (insulating layer) of the conducting polymer layer has an insulating property as well as ion permeability, causing the insulating layer to have a function as a separator and leading to no need of separately providing a member for the separator, and thus both of the conducting polymer layer as an electrode part (electrode, electrode layer) and the insulating layer as a separator part can be formed from almost the same kind of the conducting polymer.
In addition, since there is no need to separately providing the separator in the actuator element using the conducting polymer composite structure, miniaturization, cost reduction, and improvement in workability can be achieved when compared with the case to install the film that becomes a separator. Furthermore, when the actuator element using the conducting polymer composite structure is driven, a significant generative force and an expansion/contraction rate can be obtained in the case of including a substrate.
In addition, since the conducting polymer layer to be used and its surface layer that is an insulating layer are seamless, the conducting polymer layer can be prevented from being torn when driving the conducting polymer composite structure, and also has excellent impact resistance. Moreover, the conducting polymer composite structure of the present invention is useful because it can be applied to not only actuator elements but also artificial muscles using the actuator element, primary battery electrodes, secondary battery electrodes, capacitor electrodes, solar cell electrodes, and electroluminescent elements.

### BRIEF EXPLANATION OF THE DRAWINGS

- Fig. 1: is a schematic view of a substrate to be used in the present invention.
- Fig. 2: is a schematic view of a conducting polymer layer formed on the surface of a substrate to be used in the present invention.
- Fig. 3: is a schematic view of a conducting polymer composite structure of the present invention.
- Fig. 4: is a schematic cross-sectional view of a conducting polymer composite structure of the present invention.
- Fig. 5: is a state diagram of an actuator element including a conducting polymer composite structure of the present invention provided as a drive counter electrode and a cylindrical drive working electrode arranged outside of the former.
- Fig. 6: is a state diagram of an actuator element including a conducting polymer composite structure of the present invention provided as a drive counter electrode and a plate-shaped drive working electrode arranged outside of the former.
- Fig. 7: is a state diagram of an actuator element including a conducting polymer composite structure of the present invention provided as a drive counter electrode and a pillar drive working electrode arranged inside of the former.
- Fig. 8: is a state diagram of a short circuit evaluation device in which a drive counter electrode and a drive working electrode are closely arranged so that the presence or absence of the short circuit of the conducting polymer composite structure of the present invention can be evaluated.

### MODES FOR CARRYING OUT THE INVENTION

### Conducting Polymer Composite Structure

The conducting polymer composite structure of the present invention is a conducting polymer composite structure including at least one conducting polymer layer, wherein a surface layer of the conducting polymer layer is an insulating layer. The shape of the conducting polymer composite structure of the present invention and the form of the conducting polymer composite structure of the present invention in which a substrate is included will be explained below with reference to the drawings, but such a shape or form will not be limited to those in these drawings.

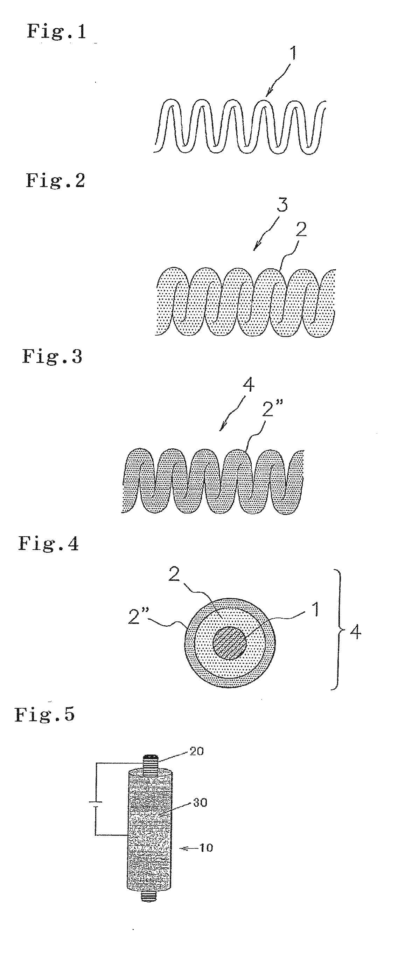

Fig. 1 shows a coil structure (e.g., a metal coil member or a metal coil member) as an example of a structure having expansion/contraction properties as a substrate 1.

Fig. 2 shows a conducting polymer-coated substrate 3 wherein the substrate 1 is coated with a conducting polymer layer 2.

Fig. 3 shows a conducting polymer composite structure 4 wherein an insulating layer 2" is formed by subjecting the conducting polymer layer 2 of the conducting polymer-coated substrate 3 to an insulation treatment.

Fig. 4 shows a schematic view of the longitudinal section of the conducting polymer composite structure 4 having the insulating layer 2", wherein the insulating layer 2" is obtained by forming the same kind of a conducting polymer layer 2' with different thickness and electrical conductivity (thinner and having small electrical conductivity) on the conducting polymer layer 2 of Fig. 2 and insulating the conducting polymer layer 2'.
In the case of forming multiple conducting polymer layers, respective conducting polymers are preferably of the same or substantially the same kind. In this way, if the conducting polymers are of the same or substantially the same kind, the affinity between the layers is strong, and the layers can be handled as if they were seamless.

As shown in Fig. 3, as for the conducting polymer composite structure 4, the outer surface of a wire member (the substrate 1) constituting the metal coil member is coated with the conducting polymer layer 2 (not shown in Fig. 3) so that the conducting polymer layer and the substrate 1 are allowed to form a composite. In addition, the surface layer of the conducting polymer layer 2 is subjected to an insulation treatment to form the insulating layer 2", and the conducting polymer composite structure 4 as an integrated electrode (drive counter electrode) wherein the function as an electrode layer and the function as a separator are integrated can be obtained by providing the insulating layer.
When the conducting polymer composite structure 4 is used as a drive counter electrode of an actuator element, the conducting polymer composite structure can obtain enough displacement of expansion/contraction, bending, or twisting as practical performance. On the other hand, since it is easy to produce a minute conducting polymer composite structure and it is not necessary to place a separator newly, workability is excellent in such a composite structure.
In addition, since the conducting polymer composite structure 4 includes a metal coil member, and the wire member (substrate) of such a metal coil member functions as a reinforcing material when an external force is applied to the outer surface from the vertical direction, an improvement of mechanical strength can also be attained, and a significant generative force as well as a significant expansion/contraction rate can be obtained when such a composite structure is driven as an actuator element.
A detailed reason why the significant generative force as well as the significant expansion/contraction rate can be obtained is not clear, but it is supposed that such a significant generative force and expansion/contraction rate can be obtained because in the case where a substrate such as a wire member of the metal coil member is contained, a mechanical strength (spring elasticity) of the substrate can be added to the conducting polymer composite structure and further the substrate (having electrical conductivity) functions as an auxiliary electrode so that reduction of the voltage drop can be attained.

In addition, as for the conducting polymer composite structure 4, the outer surface of the wire member (substrate 1) constituting the metal coil member is coated with the conducting polymer layer 2 and the conducting polymer layer 2 is further coated with the conducting polymer layer 2' with small electrical conductivity so that the conducting polymer layers 2 and 2' and the substrate 1 are allowed to form a composite. Moreover, the conducting polymer layer 2' can be easily insulated in a short time by preparing a thinner film than the conducting polymer layer 2 to give an insulating layer 2", so that the function as an electrode layer and the function as a separator are integrated to produce the conducting polymer composite structure 4 that functions as an electrode (drive counter electrode).
When the conducting polymer composite structure 4 is used as an actuator element, the conducting polymer composite structure can obtain enough displacement of expansion/contraction, bending, or twisting as practical performance, and on the other hand, since it is easy to produce a minute conducting polymer composite structure and it is not necessary to place a separator newly, workability is excellent in such a composite structure.
In addition, since the conducting polymer composite structure 4 includes a metal coil member, the wire member (substrate) of the metal coil member functions as a reinforcing material when an external force is applied to the outer surface from the vertical direction, an improvement of mechanical strength can also be attained, and a significant generative force and expansion/contraction rate can be obtained when such a composite structure is driven as an actuator element.
A detailed reason why the significant generative force and expansion/contraction rate can be obtained is not clear, but it is supposed that such a significant generative force and expansion/contraction rate can be obtained because in the case where a substrate such as the wire member of the metal coil member is contained, a mechanical strength (spring elasticity) of the substrate can be added to the conducting polymer layer and further the substrate (having electrical conductivity) functions as an auxiliary electrode so that reduction of the voltage drop can be attained.
It is also possible to form more than one layer on the conducting polymer layer 2' formed on the conducting polymer layer 2, but one (single layer) to three layers of the conducting polymer layers are preferable from the viewpoint of workability. In addition, as for the insulating layer, if multiple layers of the conducting polymer layers are provided, it is preferable that only the outermost layer has been subjected to an insulation treatment. However, the present invention is not particularly limited to such an embodiment so long as the conducting polymer layer remains to the degree that it can function as an electrode.

Further, the shape of the conducting polymer composite structure used in the present invention is not particularly limited, but it is preferably at least one shape selected from the group consisting of plane, stick, rod, planar zigzag, cornice, chain, coil, spring, fiber, tube, bag, bellows, mesh, and knit shapes. Among the conducting polymer composite structures taking the above-mentioned shapes, a tubular shape is preferable from the viewpoint of workability because it can be easily obtained by forming a conducting polymer layer on a stick-shaped working electrode for polymerization.

### Monomer for Conducting Polymer

A monomer of the conducting polymer used in the present invention is not particularly limited so long as it is contained in an electrolytic solution used in the electrolytic polymerization and polymerized by oxidation through an electrolytic polymerization method to produce a compound showing electrical conductivity. Examples of the monomer include five-membered heterocyclic compounds (e.g. pyrrole, thiophene, and isothianaphthene) and alkylated or oxyalkylated derivatives thereof.
Among them, five-membered heterocyclic compounds such as pyrrole and thiophene, and derivatives thereof are preferable. Particularly, a conducting polymer containing pyrrole and/or a pyrrole derivative is preferable because its production is easy and it is chemically stable as a conducting polymer. Further, the monomers can be used in combination of two or more thereof.

### Dopant

The dopant to be incorporated into the electrolytic solution together with the monomer during the electrolytic polymerization is not particularly limited so long as it is a compound that dissolves in a solvent used for the electrolytic polymerization. Examples of the dopant include derivatives and pigment compounds of halogen, halogen acid, nitric acid, sulfuric acid, arsenic acid, antimonic acid, boric acid, phosphoric acid, carboxylic acid, sulfonic acid, sulfoimide, and sulfomethide.
Specific examples of the above-mentioned compounds include perchloric acid, tetrafluoroboric acid, hexafluorophosphoric acid, hexafluoroarsenic acid, hexafluoroantimonic acid, trifluoroacetic acid, trifluoromethanesulfonic acid, p-toluenesulfonic acid, bis(trifluoromethanesulfonyl)imide, tris(trifluoromethanesulfonyl)methide, benzylethyl-[4'-(4"-(benzylethylamino)-diphenylmethylene)-2',5-cyclohexadienylidene]ammonium-2"',3,3"'-trisulfonic acid, and 3-hydroxy-4-[2-sulfo-4-(4-sulfophenylazo)phenylazo]-2,7-naphthalenedisulfonic acid. The salts with these counter ions include derivatives such as alkali metal salts, ammonium salts, phosphonium salts, imidazolium salts, and iodonium salts. Lithium salts, sodium salts, tetrabutylammonium salts, tetrabutyl phosphonium salts, 1,3-dimethylimidazolium salts, and 4-isopropyl 4'-methyldiphenyliodonium salts can be exemplified as such a compound.
Among the dopants described above, a compound having an alkylated sulfonyl group and a derivative thereof are preferable, and it is especially preferable for the dopant to include a trifluoromethanesulfonate ion (or a bis(trifluoromethanesulfonyl)imide ion) and/or an anion containing a plurality of fluorine atoms relative to the central atom. Moreover, the dopants can be used in combination of two or more thereof. There can be obtained a conducting polymer exhibiting an excellent expansion/contraction rate per one cycle of oxidation-reduction in the electrolytic expansion and contraction by performing electrolytic polymerization using the electrolytic solution described above.

Although the content of a trifluoromethanesulfonate ion (or a bis(trifluoromethanesulfonyl)imide ion) and/or an anion containing a plurality of fluorine atoms relative to the central atom in the electrolytic solution is not particularly limited, the total amount of such anions in the electrolytic solution is preferably 0.1 to 30 % by weight, and more preferably 1 to 15 % by weight.

The trifluoromethanesulfonate ion is a compound represented by the chemical formula CF₃SO₃⁻. Further, the anion containing a plurality of fluorine atoms relative to the central atom has a structure in which a plurality of fluorine atoms bond to the central atom such as boron, phosphorus, antimony, or arsenic. Although the anions containing a plurality of fluorine atoms relative to the central atom are not particularly limited, a tetrafluoroborate ion (BF₄⁻), a hexafluorophosphate ion (PF₆⁻), a hexafluoroantimonate ion (SbF₆⁻), and a hexafluoroarsenate ion (AsF₆⁻) can be mentioned.
Among them, CF₃SO₃⁻, BF₄⁻, and PF₆⁻ are preferable from the viewpoint of safety to human bodies and the like, and CF₃SO₃⁻ and BF₄⁻ are more preferable. Regarding the anions containing a plurality of fluorine atoms relative to the central atom, one species of anion may be used or a plurality of species of anions may be used at the same time, and, further, the trifluoromethanesulfonate ion and anions containing a plurality of fluorine atoms relative to the a plurality of species of the central atoms may be used at the same time.

### Other Additives

Publicly known additives such as polyethylene glycol and polyacrylamide other than the above-mentioned monomers and dopants may be added to the electrolytic solution used in the electrolytic polymerization method.

### Solvents in Electrolytic Solution

The solvent contained in the electrolytic solution for electrolytic polymerization is not particularly limited, and preferred examples thereof include organic compounds and/or halogenated hydrocarbons including at least one bond or functional group of an ether bond, an ester bond, a carbonate bond, a hydroxyl group, a nitro group, a sulfone group, and a nitrile group as a solvent for an electrolytic solution so as to easily obtain a conducting polymer having an expansion/contraction rate of 3 % or more per one oxidation-reduction cycle. It is further preferable for the electrolytic solution to contain one or more solvents having an ester bond. These solvents may be used in combination of two or more thereof.

The organic compounds described above can be exemplified by 1,2-dimethoxyethane, 1,2-diethoxyethane, tetrahydrofuran, 2-methyltetrahydrofuran, 1,4-dioxane (all of the foregoing compounds are organic compounds containing an ether bond), γ-butyrolactone, ethyl acetate, n-butyl acetate, tert-butyl acetate, 1,2-diacetoxyethane, 3-methyl-2-oxazolidinone, methyl benzoate, ethyl benzoate, butyl benzoate, dimethyl phthalate, diethyl phthalate, dibutyl phthalate, dioctyl phthalate, benzyl-2-ethylhexyl phthalate, (all of the foregoing compounds are organic compounds containing an ester bond), propylene carbonate, ethylene carbonate, dimethyl carbonate, diethyl carbonate, methyl ethyl carbonate (all of the foregoing compounds are organic compounds containing a carbonate bond), ethylene glycol, 1-butanol, 1-hexanol, cyclohexanol, 1-octanol, 1-decanol, 1-dodecanol, 1-octadecanol (all of the foregoing compounds are organic compounds containing a hydroxyl group), nitromethane, nitrobenzene (both of the foregoing compounds are organic compounds containing a nitro group), sulfolane, dimethyl sulfone (both of the foregoing compounds are organic compounds containing a sulfone group), and acetonitrile, butyronitrile, benzonitrile (all of the foregoing compounds are organic compounds containing a nitrile group).
The organic compound containing a hydroxyl group is not particularly limited, but it is preferably a polyhydric alcohol and a monohydric alcohol with 4 or more carbon atoms because the expansion/contraction rate of the conducting polymer is excellent.
Further, other than the above-mentioned examples, the organic compounds may be organic compounds including two or more bonds or functional groups selected from an ether bond, an ester bond, a carbonate bond, a hydroxyl group, a nitro group, a sulfone group, and a nitrile group in any combinations in the molecule. Examples of these include methyl 3-methoxypropionate and 2-phenoxyethanol.

In addition, the halogenated hydrocarbon included in the electrolytic solution is not particularly limited as long as at least one of hydrogen atoms in the hydrocarbon is substituted by halogen atom(s) and can stably be present as a liquid under the conditions of electrolytic polymerization. Examples of the halogenated hydrocarbon include dichloromethane and dichloroethane.
Only one species of the halogenated hydrocarbons can be used as a solvent in the electrolytic solution, and two or more species thereof can also be used in combination. In addition, the halogenated hydrocarbon may be used in admixture with the above-mentioned organic compounds, or a mixed solvent with the organic solvent may also be used as a solvent in the electrolytic solution.

### Working Electrode

In order to obtain the conducting polymer layer, a metal electrode using a metal or a non-metal electrode can be used as a working electrode for polymerization. The shape of the working electrode for polymerization is not particularly limited, but a stick-shaped electrode is preferable because it can form easily a conducting polymer layer and further peel the conducting polymer layer from the working electrode for polymerization.
Preferred examples of the working electrode for polymerization include electrodes made of a simple substance of metallic elements selected from the group consisting of Au, Pt, Ti, Ni, Pd, Ta, Mo, Cr, and W, or electrodes made of an alloy of such metallic elements, non-metal electrodes (e.g. a carbon electrode and an ITO glass electrode), and electrodes obtained by subjecting these various metals and non-metals to treatments such as plating and sputtering to combine the metals into an electrode.
Because the expansion/contraction rate and the generative force of the obtained conducting polymer are large and the electrode can be easily obtained, it is particularly desirable to use a metal electrode including metallic elements such as Ni or Ti. As the alloy, for example, trade names "INCOLOY alloy 825", "INCONEL alloy 600", and "INCONEL alloy X-750" (all manufactured by Daido-Special Metals Ltd.) can be used. In addition, in the case where the shape of the working electrode for polymerization is a simple shape such as a plane or a stick, the conducting polymer layer formed on the working electrode is then peeled off the electrode, and the conducting polymer layer can be used alone as a drive working electrode.

### Substrate

The shape of the substrate (an electrically conductive substrate and/or an electrically non-conductive substrate) included in the conducting polymer composite structure of the present invention is not particularly limited, but when the conducting polymer composite structure is used as an actuator element, it is preferable to use a structure having expansion/contraction properties in the form of, for example, plane, stick, rod, planar zigzag, cornice, chain, coil, spring, fiber, tube, bag, bellows, mesh, and knit shapes, and further an accordion shape, and it is particularly preferable to use a coil-shaped structure from the viewpoint of ease of fabrication.
The conducting polymer composite structure obtained by compounding the substrate and the conducting polymer layer can provide displacement excellent in expansion/contraction, bending, and twisting properties (twist characteristics) that make the structure practically usable as an actuator element. In addition, as for the conducting polymer composite structure, the substrate functions also as a core of the conducting polymer composite structure, and thus its mechanical strength can be improved. Further, by forming the conducting polymer layer on the substrate, the product can be used not only as a drive counter electrode but also as a drive working electrode that forms a pair with the drive counter electrode.

The substrate is preferably one that can exhibit expansion/contraction properties, but even those that do not exhibit expansion/contraction properties may be used without any particular limitation depending on the application. The material is not particularly limited, but examples thereof include an electrically conductive substrate from the viewpoint of electrical conductivity and mechanical strength, such as metals, polymer fibers that are plated or sputtered with a metal, polymer films, and carbon materials. In particular, a substrate showing a high electrical conductivity is more preferable.
Specifically, it is preferred to use a metal (e.g. Ag, Ni, Ti, Pd, Au, Pt, W, or Cu), Ni-plated Cu, Au-plated Ni, Au-plated Cu, and an alloy (e.g. SUS) for the electrically conductive substrate. In addition, the surface of a metal such as Au or Ni may be coated with a conducting polymer such as polypyrrole. Furthermore, a simple metal (e.g. Ag, Au, Ni, Pd, or Pt), Ni-plated Cu, and Au-plated Ni are more preferable in order to obtain a conducting polymer composite structure with large expansion/contraction performance.
Further, poly(vinylidene fluoride) (PVDF) and polytetrafluoroethylene (PTFE) may be used as the electrically non-conductive substrate. In addition, the electrically non-conductive substrate cannot provide an effect comparable to that obtained from the electrically conductive substrate in the achievement of electric potential, but it is effective in the improvement of effective mechanical strength as well as improvement of workability other than the electric potential. As for the substrate according to the present invention, it is a more preferable aspect to use an electrically conductive substrate.

The electrical conductivity of the electrically conductive substrate is preferably 1.0 × 10³ S/cm or more, more preferably 1.0 × 10⁴ S/cm or more, and especially preferably 1.0 × 10⁵ S/cm or more. In addition, the electrical conductivity of 1.0 × 10³ S/cm or more is effective for applying a sufficient electric potential to the whole element, which is enabled to displace such as expansion/contraction even if a conducting polymer composite structure with an enlarged size in the length direction or in the height direction is used.

### Conditions for Electrolytic polymerization

The conducting polymer (layer) used in the present invention can be obtained by a known electrolytic polymerization method of a monomer for a conducting polymer, and any method selected from a constant potential method, a constant current method, and an electric sweep method can be used. For example, the electrolytic polymerization method can be performed with a current density of 0.01 to 20 mA/cm² and a reaction temperature of -70 °C to 80 °C, and in order to obtain a conducting polymer with a good film quality, the electrolytic polymerization is preferably performed with a current density of 0.1 to 2 mA/cm² and a reaction temperature of -40 °C to 40 °C, and more preferably with a reaction temperature of -30 °C to 30 °C.

### Process for Producing Conducting polymer Composite Structure

The process for producing a conducting polymer composite structure according to the present invention includes the steps of forming at least one conducting polymer layer, and subjecting a surface layer of one conducting polymer layer to an insulation treatment. Moreover, a conducting polymer composite can be obtained by forming multiple conducting polymer layers and subjecting the outermost layer to an insulation treatment.
The outermost layer to be subjected to an insulation treatment may be wholly or partially insulated, but it is necessary for the conducting polymer layer functioning as an electrode to remain. In addition, formation (polymerization, coating) of the multiple conducting polymer layers is not particularly limited so long as at least all or part of the outermost layer is insulated and the conducting polymer layer that functions as an electrode layer remains.
Further, in the present invention, it is preferable to use the electrolytic polymerization method in the formation of the conducting polymer layer from the viewpoint of ease of the production, but, for example, if one equivalent to the conducting polymer layer is obtained, other methods, for example, a chemical polymerization method may be used to form a conducting polymer layer.

When multiple layers of the conducting polymer layers are formed, it is desirable that the electrical conductivity of the working electrode for polymerization or of the conducting polymer layer formed in contact with an electrically conductive substrate is higher compared to that of the conducting polymer layer (surface layer side) to be subjected to an insulation treatment. Since the electrical conductivity of the surface layer (the outermost layer) side of the conducting polymer layer is small, the insulation treatment on the surface layer side is easy to progress, and when the surface layer is turned into an insulating layer, the layer can sufficiently fulfill its function as a separator.
On the other hand, since the conducting polymer layer in contact with the substrate is highly conductive and is not affected or is hardly affected by the insulation treatment because of not being directly exposed to the surface layer, such a polymer layer has a function as an electrode (or a function as an electrode remains), which is preferable. The difference in the electrical conductivity between the conducting polymer layer in contact with the substrate and the conducting polymer layer on the surface layer side is not particularly limited so long as the polymer layer can exert a function as a separator and an electrode, and, for example, the electrical conductivity of the conducting polymer layer in contact with the substrate is preferably 50 to 1000 S/cm, and more preferably 100 to 300 S/cm. In addition, the electrical conductivity of the surface layer (the outermost layer) side of the conducting polymer layer is preferably 0.01 to 300 S/cm, and more preferably 0.1 to 100 S/cm.
The above-mentioned range is preferable because the function as a separator and an electrode can be exhibited. Moreover, in order to provide the difference in the electrical conductivity between the conducting polymer layers, known production processes and production conditions can be used without any particular limitation. For example, it is conceivable to adjust the monomer concentration, reaction temperature, applied voltage, and type of dopants to be used.

### Processing of insulation

The insulation treatment is not particularly limited, but at least one of treatments selected from the group consisting of an oxidation treatment, an acid treatment, an alkali treatment, a heat treatment, a light treatment, an electron beam treatment, and an ozone treatment can be selected. Among them, the oxidation (deterioration) treatment is particularly preferable from the viewpoint of facilities, costs, and workability.
Although the detailed reason is not clear, it is supposed that cleavage of the molecular chain of the conducting polymer and detachment of the dopant molecule are caused by performing an insulation treatment, so that the electrical conductivity of the conducting polymer is dropped to raise an electrical resistance.

As for the "insulation" in the present invention, the electrical resistance of the insulating layer is preferably in the range of 0.1 kOhm to 200 kOhm, more preferably 0.5 kOhm to 50 kOhm, and particularly preferably 1 kOhm to 10 kOhm. If the electrical resistance is in the above-mentioned range, such a resistance is preferable because the insulating layer can sufficiently fulfill its function as a separator.

The thickness of the insulating layer is not particularly limited, but the ratio of the thickness of the insulating layer to the thickness of the conducting polymer layer remaining as an electrode [(thickness of conducting polymer layer) : (thickness of insulating layer)] is preferably 1.5 : 1 to 6 : 1, and more preferably 2 : 1 to 5 : 1. If the thickness ratio is within the range described above, it is preferred since, for example, if the insulating layer is prepared to 15 µm in thickness, the thickness of the polypyrrole film to be used as an electrode can be set to about 40 µm to 100 µm.
In addition, the detailed reason why the film thickness becomes smaller (is decreased) by the insulation treatment is not clear, but it is supposed that the polypyrrole polymer chains inside the conducting polymer film are cleaved due to oxidative damage, and along with it, dopants and solvent molecules that have been retained in or inside the film are cleaved to elute together with low molecular weight polypyrrole into a solution used for an oxidation treatment, or the like, resulting in decrease in the film thickness.

Examples of the above-mentioned oxidation treatment include treatments using hydrogen peroxide, ozone gas, hypochlorous acid, potassium permanganate, or the like, and in particular, an oxidation treatment with hydrogen peroxide is preferable. The conditions for the oxidation treatment with hydrogen peroxide can be appropriately selected according to the type of the conducting polymer in the conducting polymer layer that is the subject to be treated. For example, it is preferable to use an aqueous hydrogen peroxide solution having a concentration of 1 to 40 % by weight, and it is more preferable to use an aqueous hydrogen peroxide solution having a concentration of 5 to 30 % by weight.
If the concentration of hydrogen peroxide is less than 1 % by weight, the insulation (deterioration) treatment of the conducting polymer layer needs time, which makes it difficult to provide an insulating layer that functions as a separator. In addition, if the concentration of hydrogen peroxide exceeds 40 % by weight, the insulation (deterioration) treatment of the conducting polymer layer progresses rapidly, so that the conducting polymer layer that functions as an electrode does not sufficiently remain, and thus this is not preferable.

In addition, the immersion time of the conducting polymer layer into the aqueous hydrogen peroxide solution is preferably 5 to 180 minutes, and more preferably 10 to 60 minutes. If the immersion time is less than 5 minutes, the insulation (deterioration) treatment of the conducting polymer layer does not proceed sufficiently. On the other hand, if the immersion time exceeds 180 minutes, the insulation treatment of the conducting polymer layer proceeds too much, and the conducting polymer layer that functions as an electrode does not remain sufficiently, which is undesirable.
The immersion temperature is preferably 0 to 80 °C, and more preferably 20 to 40 °C. If the immersion temperature is less than 0 °C, the workability is significantly deteriorated because of the long time required for the insulation treatment of the conducting polymer layer, and, on the other hand, if the immersion temperature exceeds 80 °C, water volatilizes from the aqueous hydrogen peroxide solution and the concentration of hydrogen peroxide varies accordingly, which is not desirable.

### Preparation of Drive Working Electrode and Drive Counter Electrode

A specific process for producing a conducting polymer composite structure as well as a process for preparing a drive working electrode and a drive counter electrode that are formed on the basis of the composite structure will be explained below. Further, the present invention is not limited to the following production method, and the like. Moreover, when the conducting polymer composite structure of the present invention is used, for example, as an actuator element, the drive working electrode means a working electrode (work electrode) that is used in expansion/contraction driving, and the drive counter electrode means a counter electrode (opposite electrode) used in expansion/contraction driving.
(1) In order to form a drive counter electrode consisting of a conducting polymer layer, a dopant and a solvent are mixed with a monomer such as pyrrole to make a mixed solution, which is served as an electrolytic solution.
(2) Then, a working electrode for polymerization in the form of a plate or a stick, or a coiled structure (e.g. a metal spring member) as a substrate is immersed in the electrolytic solution to coat the surface of the working electrode for polymerization with a conducting polymer layer such as polypyrrole (PPy) by constant current electrolytic polymerization under given conditions, thereby to obtain a coated electrode including the working electrode for polymerization and the substrate with or without peeling the conducting polymer layer from the working electrode for polymerization. A conducting polymer layer with a small electrical conductivity may be formed on the conducting polymer layer by adjusting the conditions of, for example, monomer concentration, reaction temperature, applied voltage, and type of dopants used.
(3) After the obtained conducting polymer film or the coated electrode is dried, an insulation treatment using an aqueous hydrogen peroxide solution or the like can be carried out provide a drive counter electrode having a separator layer.
(4) Then, in order to form a drive working electrode consisting of a conducting polymer layer, a dopant and a solvent are mixed with a monomer such as pyrrole to make a mixed solution, which is served as an electrolytic solution.
(5) Then, a working electrode for polymerization in the form of a plate or a stick, or an electrically conductive substrate having expansion/contraction properties is immersed in the electrolytic solution, and a conducting polymer layer such as polypyrrole (PPy) is formed on the working electrode for polymerization by constant current electrolytic polymerization under given conditions, thereby to provide a drive working electrode for polymerization including a substrate with or without peeling the conducting polymer layer from the working electrode for polymerization (polymerization electrode).

### Actuator Element

The actuator element using the conducting polymer composite structure having any size can be produced without any particular limitation, and it is possible to produce a minute element to a huge element according to the size of the substrate to be used. For example, when a metal coil-shaped member is used as a substrate, a conducting polymer layer is formed on the coil with an outer diameter of 400 µm to 10 cm, thereby to produce an actuator element. Furthermore, from the viewpoint of the insulation treatment, the coil outer diameter is preferably within the range where the insulation treatment can be controlled.

### Electrolytic Expansion/Contraction of Actuator Element

In addition, the actuator element using the conducting polymer composite structure can be driven by the electrolytic expansion/contraction method of expanding and contracting the actuator element in an electrolytic solution (operating electrolytic solution) by the electrochemical oxidation-reduction. By the electrolytic expansion/contraction of the conducting polymer composite structure, an excellent expansion/contraction rate per one oxidation-reduction cycle can be obtained, and a large amount of displacement can be obtained per a given time.
The expansion/contraction rate is preferably 3 % or more, more preferably 5 % or more, and particularly preferably 10 % or more, though it depends on the applications of the actuator element. If the expansion/contraction rate is less than 3 %, a large size of actuator element is required to obtain a practical displacement amount (expansion/contraction amount) of actuator, and thus the expansion/contraction rate less than 3 % is not desirable.

Moreover, the process to perform electrolytic expansion/contraction of an actuator element is not particularly limited. For example, it is possible to form a conducting polymer layer on the stick-shaped working electrode for polymerization, and use the conducting polymer layer (conducting polymer tube) peeled off the surface of the working electrode for polymerization as the drive working electrode, and on the other hand, use a conducting polymer composite structure wherein the surface layer of the conducting polymer layer including at least one conducting polymer layer or a substrate is an insulating layer as the drive counter electrode. The electrolytic expansion/contraction of the drive working electrode and/or the drive counter electrode can be performed by applying a voltage of 0.1 V to 10 V thereto in an electrolytic solution, thereby to provide an actuator element which can be put to practical use.

The actuator element of the present invention can be composed of the drive working electrode and the drive counter electrode as described above, and the arrangement (constitution) of the electrodes is not particularly limited so long as the actuator element can be driven by expansion/contraction, bending, or twisting. For example, it is possible to use the conducting polymer tube as the drive working electrode, and arrange a coil-shaped conducting polymer composite structure, wherein, for example, the surface layer of the conducting polymer layer is an insulating layer, as the drive counter electrode in direct contact with the inside or outside of the drive working electrode without a separator member.

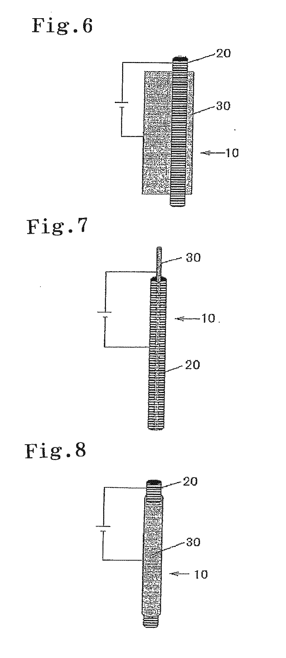

In addition, the actuator element of the present invention can be composed of the drive working electrode and the drive counter electrode as described above, and the arrangement (constitution) of the electrodes is not particularly limited so long as the actuator element is driven by expansion/contraction, bending, or twisting. For example, it is preferable to arrange the drive working electrode outside and/or inside of the conducting polymer composite structure (corresponding to the drive counter electrode) as a manner for constituting an actuator element.
Specifically, an actuator element 10 can be composed by using a method as shown in Fig. 5 in which the surrounding of a drive counter electrode 20 is covered with a cylindrical drive working electrode 30 (the drive working electrode is arranged outside), a method as shown in Fig. 6 in which a plate (sheet)-shaped drive working electrode 30 is arranged in the vicinity of the drive counter electrode 20 (the drive working electrode is arranged outside), a method as shown in Fig. 7 in which a pillar (stick)-shaped drive working electrode 30 is arranged inside of the drive counter electrode 20 (the drive working electrode is arranged inside), or further a method in which a pillar (stick)-shaped drive working electrode is arranged inside of the drive counter electrode and a cylindrical or plate (sheet)-shaped drive working electrode is further arranged outside of the drive counter electrode. The positive electrode and the negative electrode in Figs. 5 to 7 may be opposed unlike those in the drawings.

The operating electrolytic solution that is an electrolytic solution in which electrolytic expansion/contraction of the conducting polymer composite structure is carried out is not limited to those mentioned above, but preferred is a liquid containing an electrolyte in one solvent or a mixed solvent of two or more of water as a main solvent, and ethanol, acetonitrile, γ-butyrolactone, diethyl carbonate, ethylene carbonate, propylene carbonate, N,N-dimethylformamide, dimethyl sulfoxide, sulfolane, diethylene glycol dimethyl ether, polyethylene glycol, and the like because it is easy to adjust the concentration.

The temperature of the electrolytic solution used in the electrolytic expansion/contraction method is not particularly limited, but it is preferably 20 °C to 100 °C and further preferably 50 °C to 80 °C in order to expand and contract the conducting polymer at a higher rate.

### Use

The conducting polymer composite structure of the present invention can be used as an actuator element because it can generate displacement. For the conducting polymer composite structure of the present invention not coated with a resin or the like, it can be used as an actuator element that can be displaced in a linear manner in an electrolytic solution.

In other words, the actuator elements can preferably be used as driving parts which generate a rectilinear driving force, as driving parts which generate driving force for moving on track shaped rails composed of circular arc portions, or as pressing parts moving in a rectilinear manner or in a curved manner in OA apparatuses, antennae, seating devices such as beds or chairs and the like, medical apparatuses, engines, optical equipments, fixtures, side trimmers, vehicles, elevating machines, food processing devices, cleaning devices, measuring instruments, testing devices, controlling devices, machine tools, process machinery, electronics devices, electronic microscopes, electric razors, electric tooth brushes, manipulators, masts, play game devices, amusement devices, simulation devices for automobiles, holding devices for vehicle occupants, and expanding devices for accessories in aircrafts.
The actuators can be used as driving parts which generate a rectilinear driving force, as driving parts which generate driving force for moving on track shaped rails composed of circular arc portions, or as pressing parts moving in a rectilinear manner in, for example, valves, brakes, and lock devices used as machinery as a whole including the above mentioned instruments such as OA apparatus, measuring instruments, and the like.
Further, other than the devices, instruments, and machines, in mechanical components as a whole, the actuators can preferably be used as driving parts of positioning devices, driving parts of posture control devices, driving parts of elevating devices, driving parts of carriers, driving parts of moving devices, driving parts of regulating devices for the content amount, directions, or the like, driving parts of adjusting devices of axes and the like, driving parts of guiding devices, and as pressing parts of pressing devices.
In addition, the actuators, as driving parts in joint devices, can preferably be used as driving parts which impart revolving movement to joint portions or joints where direct driving is applicable such as joint intermediate members and the like. The actuator elements of the present invention can preferably be used as driving parts of changeover devices for wires and the like, driving parts of reversing gears for products and the like, driving parts of winding devices for wires and the like, driving parts of traction apparatuses, and driving parts of swing devices in horizontal directions such as oscillation and the like.

The actuator elements of the present invention can preferably be used, for example, as driving parts of ink jet parts in ink jet printers such as printers for CAD and the like, driving parts for displacing the direction of optical axis of the optical beam in the printer, head driving parts of disc drive devices such as external storage devices and the like, and as driving parts of pressing contact force regulating means of paper in feeders of image forming devices which include printers, copying machines, and facsimiles.

The actuator elements of the present invention can preferably be used, for example, as driving parts of a drive mechanism relocating measuring portions or feeding portions making high frequency power feeding portion such as antennae shared between the frequencies for radio astronomy move to second focus point, and driving parts for lifting mechanism in masts used for example for vehicle-loaded pneumatic operating stretchable masts (telescoping masts) and the like or antennae.

The actuator elements of the present invention can preferably be used , for example, as driving parts of massaging parts of chair-shaped massagers, driving parts of nursing beds or medical beds, driving parts of posture control devices of electrically reclining chairs, driving parts of stretching rods controlling sitting up and down movement of backrest and ottoman of reclining chairs used as massager, comfort chairs and the like, driving parts used as backrests for reclining chairs in nursing beds or leg rests in furniture on which people place some body portions or driving parts used as rotation drive and the like of nursing beds, and driving parts for controlling posture of uprising chairs.

The actuator elements of the present invention can preferably be used , for example, as driving parts of testing devices, driving parts of pressure measuring devices for blood pressure and the like used as external blood treatment apparatus, driving parts for catheters, endoscopes, device or something, tweezers, and the like, driving parts of cataract operation devices using ultrasonic, driving parts of movement devices such as jaw movement devices and the like, driving parts of means for relatively deforming members of chassis of hoists for sickly weak people, and driving parts for elevation, moving, posture control, and the like of nursing beds.

The actuators of the present invention can preferably be used as, for example, driving parts of vibration-control devices for decreasing vibration transmitted from vibration generating parts such as engines and the like to vibration receivers such as frames and the like, driving parts of valve train devices for intake and exhaust valves of internal combustion engine, driving parts of fuel-control devices of engines, and driving parts of fuel-providing systems of engines such as diesel engines, and the like.

The actuator elements of the present invention can preferably be used as, for example, driving parts of calibration devices of imaging devices with compensation function for blurring of images due to hand movement, driving parts of lens driving mechanism of lens for home video camera, and the like, driving parts of driving mechanism of mobile lenses of optical devices such as still cameras, video cameras, and the like, driving parts of automatic focus parts of cameras, driving parts of lens-barrel used as image-taking devices of cameras, video cameras, and the like, driving parts of automatic guiders which take in the light of optical telescopes, driving parts of lens driving mechanism or lens-barrel of optical devices having two optical systems such as stereoscopic cameras, binoculars, and the like, driving parts or pressing parts providing compressing force to fibers of wavelength conversion of fiber-type wavelength tunable filters used as optical communication, optical information processing and for optical measuring and the like, driving parts of optical axis alignment devices, and driving parts of shutter mechanism of cameras.

The actuator elements of the present invention can preferably be used as, for example, pressing parts of fixtures for caulking hose clips to hose bodies.

The actuator elements of the present invention can preferably be used as, for example, driving parts of coil springs and the like of automobile suspensions, driving parts of fuel filler lid openers which unlock fuel filler lid of vehicles, driving parts of stretching and retraction of bulldozer blades, driving parts of driving devices for changing gear ratios of automotive transmissions automatically, or for disengaging and engaging clutches automatically.

The actuator elements of the present invention can preferably be used as, for example, driving parts of elevating devices of wheel chairs with seat plate elevation devices, driving parts of elevation devices for eliminating the level difference, driving parts of elevation transfer equipment, driving parts for elevating medical beds, electric beds, electric tables, electric chairs, nursing beds, elevation tables, CT scanners, cabin tilt devices for trucks, lifters, and the like, each kind of elevation machine devices and driving parts of loading and unloading devices of special vehicles for carrying heavy materials.

The actuator elements of the present invention can preferably be used as, for example, driving parts of discharge amount controlling mechanism such as nozzle devices for food discharge used in food processing devices, and the like.

The actuator elements of the present invention can preferably be used as, for example, driving parts for elevating and the like of a carriage of cleaning devices, cleaning parts and the like.

The actuators of the present invention can preferably be used as, for example, driving parts of measuring parts of three dimensional measuring devices measuring surface shape, driving parts of stage devices, driving parts of sensor parts of such systems as detecting operating characteristics of tires, driving parts of initial speed-imparting devices of evaluation equipment of impact response of force sensors, driving parts of piston driving devices of piston cylinders of devices for testing water-permeability hole, driving parts for aiming in the direction of elevation angles in condensing and tracking type power generating equipments, driving parts of vibrating devices of tuning mirrors of sapphire laser oscillation wavelength switching mechanism for measuring devices which include measuring devices for gas concentration, driving parts of XY [theta] table when alignment is required in testing devices of printed circuit boards or in testing devices of flat panel displays such as liquid crystals, PDPs and the like, driving parts of adjustable aperture devices used in charged particles beam systems and the like such as electronic beam (E beam) systems, focused ion beam (FIB) systems, and the like, driving parts of supporting devices of elements under test or sensing parts in flatness measuring devices, and driving parts of precisely positioning devices such as microscopic device assembly, semi-conductor photolithography machines, semi-conductor inspecting devices, three dimensional measuring devices, and the like.

The actuator elements of the present invention can preferably be used as, for example, driving parts of electric razors, and driving parts of electric toothbrushes.

The actuator elements of the present invention can preferably be used as, for example, driving parts of imaging devices of three dimensional objects, driving parts of optical devices for optical system adjusting focal depth for reading out commonly used as CDs and DVDs, driving parts of variable mirrors capable of easily varying focal positions by changing the shape of a surface subject to drive by a plurality of of actuators as active curved surfaces to approximately form a desirable curved surface, driving parts of disc devices capable of moving move units in a rectilinear manner having at least one magnetic head such as optical pick up devices and the like, driving parts of head load mechanisms of magnetic tape head actuator assembly such as linear tape storage systems and the like, driving parts of image-forming devices applied for electronograph copying machines, printers, facsimiles, and the like, driving parts of loaded members such as magnetic head members, and the like, driving parts of optical disc exposure devices which drive and control focusing lens groups in the direction of optical axis, driving parts of head driving means which drive optical heads, driving parts of information recording and reproducing devices which record information on record media or play information recorded on record media, and driving parts for switching operations of circuit breaker (circuit breaker for power distribution).

The actuator elements of the present invention can preferably be used as driving parts of the following devices, for example, driving parts of press molding and vulcanizing devices for rubber compositions, driving parts of parts arrangement devices which arrange delivered parts in single rows or in single layers, or arrange the parts in desired posture, driving parts of compression molding devices, driving parts of holding mechanism of welding devices, driving parts of bag filling and packaging machines, driving parts of machine tools such as machining centers and the like, molding machines such as injection molding machines, press machines, and the like, driving parts of fluid coating devices such as printing devices, coating devices, lacquer spraying devices, and the like, driving parts of manufacturing devices which manufacture camshafts and the like, driving parts of hoisting devices of covering materials, driving parts of selvedge control elements and the like in shuttle-less looms, driving parts of needle drive systems of tufting machines, looper driving systems, knife driving systems, and the like, driving parts of cam grinders or polishing devices which polish parts such as ultra precision machining tools, driving parts of break devices of harness frames of looms, driving parts of opening devices which form opening portions of warp threads for weft thread insert in looms, driving parts of peeling devices of protection sheets of semi-conductor substrates and the like, driving parts of threaders, driving parts of assembly devices of electron guns for CRT, driving parts of linear control devices with shifter fork drive selection of Torchon lace machines for manufacturing Torchon lace having applied uses for welt for clothes, table cloths, sheet coverings, and the like, driving parts of horizontal moving mechanisms of anneal window driving devices, driving parts of support arms of glass melting kiln forehearth, driving parts of making forward and backward movement for rack of exposure devices of fluorescent screen forming methods of color TV tubes and the like, driving parts of torch arms of ball bonding devices, driving parts of bonding heads in XY directions, driving parts of mounting processes of parts or measuring inspection processes of parts in mounting chip parts or measuring using probes, elevation driving parts of cleaning supports of board cleaning devices, driving parts of making probe heads scanning on glass board forward or backward, driving parts of positioning devices of exposure devices which transcribe patterns on boards, driving parts of microscopic positioning devices with sub micron orders in the field of high precision processes, driving parts of positioning devices of measurement devices of chemical mechanical polishing tools, driving parts for positioning stage devices preferable for exposure devices or scanning exposure devices used at the time of manufacturing circuit devices such as conductor circuit elements, liquid crystal dicplay elements, and the like in lithography processes, driving parts of means of carrying works and the like or positioning works and the like, driving parts for positioning or carrying such as reticle stages or wafer stages and the like, driving parts of stage devices for precisely positioning in chambers, driving parts of positioning devices of work pieces or semi-conductor wafers in chemical mechanical polishing systems, driving parts of stepper devices of semi-conductors, driving parts of devices precisely positioning in guiding stations of processing machines, driving parts of vibration-control devices of passive vibration-control and active vibration-control types for each kind of machine represented by machine tools and the like such as NC machines, machining centers, and the like, or steppers in IC industry, driving parts of displacing reference grids board of light beam scanning devices in the direction of optical axis of the light beam in exposure devices used as lithography process for manufacturing semi-conductor elements or liquid crystal display elements and the like, and driving parts of transfer devices transferring into item processing units in the traverse direction of conveyors.

The actuator elements of the present invention can preferably be used as, for example, driving parts of positioning devices of probes of scanning probe microscopes such as electron microscopes and the like, and driving parts of positioning and the like of micro-motion devices for sample in electron microscopes.

The actuator elements of the present invention can preferably be used as, for example, driving parts of joint mechanisms represented by wrists and the like of robot arms in robots including auto welding robots, industrial robots, robots for nursing care or manipulators, driving parts of joint other than direct drive type, fingers of robots, driving parts of motion converting mechanisms of slide retractable zipper devices used for fingers of robots, hands of robots and the like, driving parts of micro manipulators for operating microscopic objects in any state in cell minute operations or in assembly operation of microscopic parts and the like, driving parts of artificial limbs such as electric artificial arms and the like having a plurality of fingers which can freely open and close, driving parts of robots for handling, driving parts of assistive devices, and driving parts of power suits.

The actuator elements of the present invention can preferably be used as, for example, pressing parts of the devices pressing upper rotary blades, lower rotary blades, or the like of side trimmers.

The actuator elements of the present invention can preferably be used as, for example, driving parts of generators and the like in play devices such as for pachinko games and the like, driving parts of amusement devices such as dolls, pet robots, and the like, and driving parts of simulation devices of those for automobiles.

The actuator elements of the present invention can preferably be used as, for example, driving parts of valves used as machines in general including the above instruments and the like, and for example, the actuators can preferably be used as driving parts of valves of re-condensers of vaporized helium gas, driving parts of bellows type pressure sensitive control valves, driving parts of opening devices which drive harness frames, driving parts of vacuum gate valves, driving parts of control valves of solenoid operations for liquid pressure systems, driving parts of valves with movement transmitting devices using pivot levers built in, driving parts of valves of movable nozzles of rockets, driving parts of suck back valves, and driving parts of regulator valves.

The actuator elements of the present invention can preferably be used as, for example, pressuring parts of brakes used as machines in general including the above mentioned instruments and the like, and for example, pressuring parts of control devices which are preferably used as brakes for emergency, security, stationary, and the like, and pressuring parts of brake structures and brake systems.

The actuator elements of the present invention can preferably be used as, for example, pressuring parts of lock devices used as machines in general including the above mentioned instruments and the like and for example, pressuring parts of mechanical lock devices, pressuring parts of steering lock devices for vehicles, pressuring parts of power transmission devices which have both load shedding mechanisms and connection releasing mechanisms.

The conducting polymer composite structure can also be used suitably for primary battery electrodes, secondary battery electrodes, capacitor electrodes, solar cell electrodes, electroluminescent elements, electrochromic elements, EC displays, electrodes for various sensors (humidity, temperature, light, ion, gas, taste, pressure, and the like), and switches for keyboards of electronic calculators, other than actuator elements.

### EXAMPLES

Hereinafter, examples and comparative examples of the present invention are described, but the present invention is not limited to these examples and comparative examples.

### Example 1

(1) An electrolytic solution was prepared from a mixture solution of phenoxyethanol (manufactured by Tokyo Chemical Industry Co., Ltd.) and ethyl acetate (manufactured by Tokyo Chemical Industry Co., Ltd.) (mixing ratio by volume = 50 : 50) at a concentration of 0.15 mol/l of pyrrole (manufactured by Aldrich) as a monomer and 0.3 mol/l of mixture salt of tetrabutylammonium bis(trifluoromethanesulfonyl)imide (manufactured by Aldrich) and tetrabutylammonium tetrafluoroborate (TBABF₄) (manufactured by Aldrich) (mixing ratio by molar = 9 : 1).
(2) A coil-shaped PPy (PPy coil) having a film thickness of 80 µm was obtained on a coil-shaped Au-plated Ni wire (manufactured by The Nilaco Corporation, 0.1 mm in wire diameter, 0.4 mm pitch, outer diameter of 0.85 mm) as a drive counter electrode for polymerization by constant current electrolytic polymerization (0.5 mA/cm², 20 hours, -10 °C).
(3) The obtained PPy coil was dried (25 °C × 1 hour) and immersed in a 5 % aqueous solution of hydrogen peroxide (manufactured by Tokyo Chemical Industry Co., Ltd.) for 3 hours at room temperature to obtain a drive counter electrode that was a separator-integrated PPy coil having a film thickness of 75 µm.
(4) In order to measure the electrical resistance of the drive counter electrode of the PPy coil, a measuring terminal was connected to exposed metal part of the PPy coil, and two Au plates (manufactured by The Nilaco Corporation, area 22 mm × 22 mm) as the other terminal were used and crimped onto the PPy-coated part of the PPy coil so that the electrical resistance was measured.
(5) An electrolytic solution for a PPy drive working electrode was prepared from a mixture solution of phenoxyethanol, diethyl phthalate (manufactured by Tokyo Chemical Industry Co., Ltd.) and benzyl-2-ethylhexyl phthalate (manufactured by Tokyo Chemical Industry Co., Ltd.) (mixing ratio by volume = 50 : 45 : 5) at a concentration of 0.15 mol/l of pyrrole and 0.3 mol/l of mixture salt of tetrabutylammonium bis(trifluoromethanesulfonyl)imide (TBATFSI) and tetrabutylammonium tetrafluoroborate (TBABF₄) (mixing ratio by molar = 9 : 1) containing 0.5 mmol/l of benzylethyl-[4'-(4"-(benzylethylamino)-diphenylmethylene)-2',5-cyclohexadienylidene]ammonium-2"',3,3"'-disodium trisulfonate (manufactured by Kanto Chemical Co., Inc.).
(6) A drive working electrode of a PPy tube having a film thickness of 25 µm was obtained on a nickel stick (manufactured by The Nilaco Corporation) with a diameter of 1.0 mm as a working electrode for polymerization by constant current electrolytic polymerization (0.15 mA/cm², 12 hours, -10 °C).
(7) Using the obtained drive counter electrode of the PPy coil and the obtained drive working electrode of the PPy tube, Both the electrodes were closely contacted with each other and an electric current was passed between them to confirm the presence or absence of a short circuit. The evaluation of the presence or absence of a short circuit is performed in the case corresponding to the positional relationship between the drive counter electrode and the drive working electrode as shown in Fig. 8. In the case where there is no insulating layer of the drive counter electrode, a short circuit occurs because both electrodes are in close contact with each other. Thus, the presence of the insulating layer can be confirmed by the fact that a short circuit does not occur.
(8) In addition, using the drive counter electrode of the PPy coil and the drive working electrode of the PPy tube, an electrolytic expansion/contraction was measured by applying a potential of 0.1 Hz, 3.6 Vp-p in a mixed solution of acetonitrile (manufactured by Kanto Chemical Co., Inc.) and water (mixing ratio by volume = 4 : 6) included lithium bis(trifluoromethanesulfonyl)imide (LiTFSI) (manufactured by Aldrich) as an operating (driving) electrolytic solution. Further, the evaluation of the electrolytic expansion/contraction is performed in the case corresponding to the positional relationship between the drive working electrode and the drive counter electrode as shown in Fig. 6, and it has been confirmed that the electrode performance (including expansion/contraction drive performance) can be retained even if an insulating layer exists on the surface of the drive counter electrode.

### Example 2

(1) Additional electrolytic polymerization on the PPy coil (only the first layer) obtained in the same manner as in Example 1 was carried out in such a manner that constant current electrolytic polymerization (2.5 mA/cm², 20 minutes, -10 °C) was carried out on the PPy coil in a mixed solution of isopropyl benzoate (manufactured by Kanto Chemical Co., Inc.) and diethyl phthalate (mixing ratio by volume = 17 : 83) that contains 0.25 mol/l of pyrrole as a monomer, and 0.5 mol/l of mixture salt of tetrabutylammonium bis(trifluoromethanesulfonyl)imide (TBATFSI) and tetrabutyl ammonium trifluoromethanesulfonate (TBATFS) (manufactured by Aldrich) (mixing molar ratio = 19 : 1) except that no hydrogen peroxide treatment was carried out, thereby to obtain a polypyrrole (PPy) coil (the first layer + the second layer) having a film thickness of 110 µm.
(2) The PPy coil was dried (25 °C × 1 hour), and immersed in a 5 % aqueous hydrogen peroxide solution for 20 minutes at room temperature to obtain a drive counter electrode of the PPy coil with a separator function having a film thickness of 90 µm.
(3) By using the obtained drive counter electrode of the PPy coil, the electrical resistance was measured in the same manner as in Example 1.
(4) A drive working electrode of the PPy tube for measuring the expansion/contraction performance was obtained in the same manner as in Example 1.
(5) By using the obtained drive counter electrode of the PPy coil and the obtained drive working electrode of the PPy tube, electrolytic expansion/contraction was measured in the same manner as in Example 1.

### Comparative Example 1

The performance of the drive working electrode of the PPy tube obtained in the same manner as in Example 1 was evaluated using the drive counter electrode of the PPy coil obtained in the same manner as in Example 1 except that no hydrogen peroxide treatment was carried out.

### Example 3

(1) An electrolytic solution for the electrolytic polymerization of the first layer was prepared from 0.15 mol/l of pyrrole (manufactured by Aldrich) as a monomer, a mixture of tetrabutylammonium bis(trifluoromethanesulfonyl)imide (manufactured by Aldrich) and tetrabutylammonium tetrafluoroborate (TBABF₄) (manufactured by Aldrich) (mixing molar ratio = 9 : 1) at a concentration of 0.3 mol/l and a mixed solution of phenoxyethanol (manufactured by Tokyo Chemical Industry Co., Ltd.) and ethyl acetate (manufactured by Tokyo Chemical Industry Co., Ltd.) (mixing ratio by volume = 50 : 50).
(2) A (flat film-like) polypyrrole (PPy) monolayer film having a thickness of 40 µm was obtained on a working electrode for polymerization of a Ni metal plate (manufactured by The Nilaco Corporation, 30 mm in length, 30 mm in width, 0.5 mm in thickness) by constant current electrolytic polymerization (0.3 mA/cm², 7.5 hours, -10 °C).
(3) As additional electrolytic polymerization of the second layer on the obtained first layer of the PPy monolayer film (flat film), constant current electrolytic polymerization (0.5 mA/cm², 1 hour, -10 °C) was carried out on the above-mentioned PPy coil film (the first layer) in a mixed solution of isopropyl benzoate (manufactured by Kanto Chemical Co., Inc.) and diethyl phthalate (mixing ratio by volume = 17 : 83) that contains 0.25 mol/l of pyrrole as a monomer, and a mixture of tetrabutylammonium bis(trifluoromethanesulfonyl) -imide (TBATFSI) and tetrabutylammonium trifluoromethanesulfonate (TBATFS) (manufactured by Aldrich) (mixing molar ratio = 19 : 1) at a concentration of 0.5 mol/l, and then a PPy multilayered film (the first layer + the second layer, thickness of the second layer: 20 µm) having a film thickness of 60 µm and having the second layer was obtained by peeling the film off the Ni electrode plate.
(4) The PPy multilayer film (the first layer + the second layer) was dried (25 °C × 1 hour), and immersed in a 5 % aqueous hydrogen peroxide solution (manufactured by Tokyo Chemical Industry Co., Ltd.) for 40 minutes at room temperature to obtain a PPy multilayer film (flat film) having a film thickness of 55 µm after an oxidation treatment (the thickness of the second layer of the insulating layer after the oxidation reaction: 15 µm).
(5) In order to measure the electrical conductivity of the flat PPy film after the oxidation treatment, the electrical conductivity was measured by using a resistivity meter (Loresta-GP, MCP-T600, manufactured by Mitsubishi Chemical Corporation) by a 4-point probe method while crimping the measurement terminal to the PPy flat film (measurement conditions, 30 mm × 30 mm, 20 °C; the surface to be measured is the side that has been adhered to the working electrode for polymerization: the conducting polymer layer that has been in contact with the working electrode for polymerization and is peeled off the electrode).
(6) In order to confirm the presence of the insulating layer by the oxidation treatment of the PPy flat film, a tester was brought into contact with both the one side and the opposite side of the PPy flat film so that the resistance between both sides were measured (measurement conditions, 30 mm × 30 mm, 20 °C), and two PPy flat films were crimped with each other predominantly on the surface side having a higher resistance (for example, when two monolayer films (flat films) are used, the two films is constituted in the order of an insulating layer, a conducting polymer layer, an insulating layer, and a conducting polymer layer thereby to confirm the presence of a short circuit and evaluate the function of the separator.

### Comparative Example 2

The electrical conductivity and the separator function were evaluated by using the PPy monolayer film obtained by the same treatment method as in Example 3 except that the second layer of the PPy film was not prepared and only the first layer of the PPy monolayer film (flat film) was peeled off the Ni metal plate electrode.

### Comparative Example 3

The electrical conductivity and the separator function were evaluated by using the PPy monolayer film obtained by the same treatment method as in Example 3 except that the first layer of the PPy film was not prepared and only the second layer of the PPy monolayer film (flat film) was peeled off the Ni metal plate electrode.

**Table 1**

| Evaluation results | Example | | Comparative Example |
|---|---|---|---|
| | 1 | 2 | 1 |
| Type of PPy (coated) coil | Monolayer (First layer) | Multilayer (First layer + Second layer) | Monolayer (First layer) |
| H₂O₂ treatment time | 180 minutes | 20 minutes | None |
| Electrical resistance (Ohm) (Performance of drive counter electrode) | 4500 | 5000 | 30 |
| Presence or absence of short-circuits between electrodes in close contact state | No short circuit | No short-circuit | Short-circuit occurred |
| Expansion/Contraction Rate (%) (Performance of drive working electrode) | 12 | 12 | 12 |

**Table 2**

| Evaluation results | Example | Comparative Example | |
|---|---|---|---|
| | 3 | 2 | 3 |
| Type of PPy flat film | Multilayer (First layer + Second layer) | Monolayer (First layer) | Monolayer (Second layer) |
| H₂O₂ treatment time | 40 minutes | | |
| Film thickness of surface layer after oxidation treatment | 55 | 40 | 15 |
| (Film thickness of surface layer before oxidation treatment)(µm) | (60) | (40) | (20) |
| Electrical conductivity of surface side of working electrode for polymerization | 130 | 140 | 1 |
| (S/cm) (Electrical conductivity before oxidation treatment) | (250) | (300) | (10) |
| Electrical resistance (Ohm) between front surface and rear surface of PPy flat film | 1100 | 40 | 1500 |
| Presence or absence of short circuits between flat films with each other in close contact state | No short-circuit | Short-circuit occurred | No short-circuit |

From the results in Table 1, it was confirmed that in Example 1, the drive counter electrode had a large electrical resistance capable of exhibiting a function as a separator by insulating the surface layer of the conducting polymer layer using a substrate (a metal coil) whose surface is coated with the PPy layer that was the conducting polymer layer. Further, it was also confirmed that the expansion/contraction rate of the conducting polymer (PPy) tube which was a drive working electrode was exactly the same as that observed in Comparative Example 1 wherein no insulation treatment was performed, indicating that the electrode performance (drive counter electrode performance) was retained.
The details of the reason are not clear, but it is supposed that even if the conducting polymer layer which functions as an electrode loses partially the electrical conductivity by the insulation treatment, the surface area of the conducting polymer layer which is important for electrode performance is not decreased and the conducting polymer layer remains in a sufficient amount. On the other hand, in Comparative Example 1, the electrical resistance was small and a short circuit was confirmed between the drive working electrode and the drive counter electrode because no insulation treatment was performed.

From the results in Table 2, it was confirmed that in Comparative Example 2, the PPy monolayer film (only the first layer) composed only of the conducting polymer layer without a substrate was used to insulate the surface layer of the conducting polymer layer, so that an insulating layer that functions as a separator was unable to be formed though the electrode function (electrical conductivity) was retained.
The details of the reason are not clear, but it is supposed that in the case of the PPy monolayer film composed only of the first layer, its electrical conductivity was kept large, i.e. the density of the conducting polymer layer having electrical conductivity was large, the penetration rate of the oxidation treatment solution into the conducting polymer layer became smaller, resulting in failure to form the insulating layer sufficiently.
In Comparative Example 3, since the film thickness of the PPy monolayer film (only the second layer) in the form of a flat film was thin before the oxidation treatment, and the insulation treatment was performed throughout the film (the film was easy to be oxidized), it was confirmed that the film did not have the very electrode function (electrical conductivity). On the other hand, it was confirmed that the PPy multilayer film of Example 3 obtained by combining the PPy monolayer films of Comparative Examples 2 and 3 had both of an electrode function (electrical conductivity) and an insulating layer acting as a separator.

### EXPLANATION OF REFERENCE NUMERALS

- 1: = Substrate (Coiled structure)
- 2, 2': = Conducting polymer layer
- 3: = Conducting polymer-coated substrate
- 2": = Insulating layer
- 4: = Conducting polymer composite structure
- 20: = Drive counter electrode
- 30: = Drive working electrode
- 10: = Actuator element

## Claims

1. A conducting polymer composite structure comprising at least one conducting polymer layer,
wherein a surface layer of the conducting polymer layer is an insulating layer.

2. The conducting polymer composite structure according to claim 1,
wherein the shape of the conducting polymer composite structure is at least one shape selected from the group consisting of plane, stick, rod, planar zigzag, cornice, chain, coil, spring, fiber, tube, bag, bellows, mesh, and knit shapes.

3. The conducting polymer composite structure according to claim 1 or 2, further comprising a substrate.

4. The conducting polymer composite structure according to any one of claims 1 to 3,
wherein the conducting polymer of the conducting polymer layer comprises pyrrole and/or a pyrrole derivative in its molecular chain.

5. The conducting polymer composite structure according to claim 3 or 4,
wherein the shape of the substrate is at least one shape selected from the group consisting of plane, stick, rod, planar zigzag, cornice, chain, coil, spring, fiber, tube, bag, bellows, mesh, and knit shapes.

6. An actuator element using the conducting polymer composite structure according to any one of claims 1 to 5.

7. The actuator element according to claim 6,
wherein the substrate has expansion/contraction properties.

8. The actuator element according to claim 6 or 7,
wherein the conducting polymer layer is driven by expansion/contraction, bending, or twisting through an electrolytic expansion/contraction.

9. A process for producing a conducting polymer composite structure comprising at least one conducting polymer layer,
comprising the following steps:
- forming at least one conducting polymer layer; and
- subjecting a surface layer of the conducting polymer layer to an insulation treatment.

10. The process for producing a conducting polymer composite structure according to claim 9,
wherein the conducting polymer composite structure further comprises a substrate.

11. The process for producing a conducting polymer composite structure according to claim 9 or 10,
wherein the conducting polymer layer is obtained by electrolytic polymerization of at least pyrrole and/or a pyrrole derivative.

12. The process for producing a conducting polymer composite structure according to any one of claims 9 to 11,
wherein the insulation treatment is at least one treatment selected from the group consisting of an oxidation treatment, an acid treatment, an alkali treatment, a heat treatment, a light treatment, an electron beam treatment, and an ozone treatment.
